# EUROPEAN PATENT APPLICATION

(11) **EP 4 781 850 A2**
(43) Date of publication of application: **29.07.2026**
(21) Application number: 26184986.3
(22) Date of filing: 09.03.2020
(51) Int. Cl.: A24F 47/00

(54) **APPARATUS FOR AEROSOL GENERATING SYSTEM**

(30) Priority: 11.03.2019 US 201962816291 P
(62) Divisional of application: 20714855.2
(71) Applicant: Nicoventures Trading Limited, London WC2R 3LA (GB)
(72) Inventor: BLANDINO, Thomas Paul, Wisconsin, 53718 (US); HALLIDAY, Edward Joseph, London, WC2R 3LA (GB)
(74) Representative: Dehns

(57) **Abstract**

Apparatus for an aerosol generating system comprises: an inductive element for inductively heating a susceptor arrangement to heat an aerosol generating material to thereby generate an aerosol; an insulating member which in use is located between the inductive element and the susceptor arrangement to thermally insulate the susceptor arrangement from the inductive element; a temperature sensor for measuring a temperature at a location in the system insulated in use from the susceptor arrangement by the insulating member; and a control arrangement. The control arrangement is configured to monitor the temperature measured by the temperature sensor and take a control action if, based on the temperature measured by the temperature sensor, the control arrangement determines that the susceptor arrangement is overheating.

## Description

### Technical Field

The present invention relates to apparatus for an aerosol generating system.

### Background

Smoking articles such as cigarettes, cigars and the like burn tobacco during use to create tobacco smoke. Attempts have been made to provide alternatives to these articles that burn tobacco by creating products that release compounds without burning. Examples of such products are heating devices which release compounds by heating, but not burning, the material. The material may be for example tobacco or other non-tobacco products, which may or may not contain nicotine.

### Summary

According to a first aspect of the present disclosure, there is provided apparatus for an aerosol generating system, comprising: an inductive element for inductively heating a susceptor arrangement to heat an aerosol generating material to thereby generate an aerosol; an insulating member which in use is located between the inductive element and the susceptor arrangement to thermally insulate the susceptor arrangement from the inductive element; a temperature sensor for measuring a temperature at a location in the system insulated in use from the susceptor arrangement by the insulating member; and a control arrangement configured to monitor the temperature measured by the temperature sensor and take a control action if, based on the temperature measured by the temperature sensor, the control arrangement determines that the susceptor arrangement is overheating.

The control arrangement may be configured to determine that the susceptor arrangement is overheating by determining if the temperature measured by the temperature sensor is greater than or equal to a threshold temperature value.

In use, the insulating member may at least partially surround the susceptor arrangement.

The insulating member may be a tubular member which in use surrounds the susceptor.

The insulating member may be made of polyether ether ketone.

The inductive element may be a first inductor coil and the first inductor coil may surround the insulating member.

The temperature sensor may be arranged to measure a temperature at or near an outer surface of the insulating member.

The first inductor coil may be in contact with a radially outward surface of the insulating member and the insulating member may fully or partially support the first inductor coil.

The inductive heating circuit may comprise a second inductor coil for heating the susceptor arrangement and the second inductor coil may surround the insulating member and be in contact with the radially outward surface of the insulating member and the insulating member may fully or partially support the second inductor coil, and the first inductor coil, the second inductor coil and the insulating member in use may be located coaxially with one another around a central longitudinal axis of the susceptor arrangement.

The pre-determined threshold temperature value may be from 90°C to 180°C.

The pre-determined threshold temperature value may be around 126°C.

The control action which the control arrangement is configured to take may comprise stopping the inductive element from heating the susceptor by preventing a supply of electrical power to the inductive element, or reducing the supply of power to the inductive element to heat the susceptor.

The susceptor arrangement may comprise a first and a second heating zone, wherein the inductive element may be a first inductive element for heating the first heating zone and the apparatus may further comprise a second inductive element for heating the second heating zone; and the second inductive element may also be insulated from the susceptor arrangement by the insulating member.

The first inductive element and the second inductive element may be configured to be operable to simultaneously maintain both the first heating zone and the second heating zone at temperatures for heating the aerosol generating material to produce an aerosol.

The temperature sensor may be located at a predetermined location which is insulated from the susceptor by the insulating member, and which is predetermined to be a potentially hottest location, during use of the system to generate an aerosol, of a plurality of locations in the system which are insulated from the susceptor by the insulating member.

The predetermined location may be a hottest location, during use of the system to generate an aerosol, on the surface of the insulating member.

According to a second aspect of the present disclosure there is provided an aerosol generating device comprising an apparatus according to the first aspect of the present disclosure, wherein the aerosol generating device is configured in use to generate an aerosol to be inhaled by a user.

According to a third aspect of the present disclosure there is provided an aerosol generating system comprising an aerosol generating device according to the second aspect and an article comprising an aerosol generating material for being heated by the device in use to thereby generate an aerosol.

The aerosol generating material may comprise a tobacco material.

According to a fourth aspect of the present disclosure there is provided apparatus for an aerosol generating system for generating an aerosol to be inhaled by a user, the apparatus comprising: an insulating member for, when the system is in use to generate an aerosol, insulating an inductive element from a susceptor arrangement arranged to heat an aerosol generating material to thereby generate an aerosol, wherein the inductive element is for heating the susceptor arrangement; a temperature sensor for, when the system is in use to generate an aerosol, measuring a temperature at a location in the system insulated from the susceptor arrangement by the insulating member, wherein the temperature sensor is configured to provide a measurement of a temperature at the location in the system to a control arrangement to allow the control arrangement to determine if the susceptor arrangement is overheating and to allow the control arrangement to take a control action if the control arrangement determines that the susceptor arrangement is overheating.

According to a fifth aspect of the present disclosure there is provided a method for a control arrangement for an aerosol generating device, the apparatus comprising: an inductive element for inductively heating a susceptor arrangement to heat an aerosol generating material to thereby generate an aerosol; an insulating member which in use is located between the inductive element and the susceptor arrangement to thermally insulate the susceptor arrangement from the inductive element; a temperature sensor for measuring a temperature at a location in the system insulated in use from the susceptor arrangement by the insulating member; and the control arrangement; wherein the method comprises: monitoring the temperature measured by the temperature sensor; and taking a control action if, based on the temperature measured by the temperature sensor, the control arrangement determines that the susceptor arrangement is overheating.

According to another aspect of the present disclosure there is provided apparatus for an aerosol generating system, comprising: one or more inductive elements for inductively heating a susceptor arrangement to heat an aerosol generating material to thereby generate an aerosol; an insulating member which in use is located between the inductive element and the susceptor arrangement to thermally insulate the susceptor arrangement from the inductive element; and a control arrangement configured to determine a characteristic indicative of a temperature of one or more of the inductive elements and take a control action if, based on the determined characteristic, the control arrangement determines that the susceptor arrangement is overheating.

The determined characteristic may be an electrical resistance of one of the inductive elements. The control arrangement may be configured to determine that the susceptor arrangement is overheating if the electrical resistance of one of the inductive elements exceeds a predetermined threshold. The apparatus may comprise two inductive elements. The control arrangement may be configured to determine that the susceptor arrangement is overheating if an electrical resistance of either of the two inductive elements exceeds a predetermined threshold. The one or more inductive heating elements may each comprise an inductor coil. The inductor coils may be wound from Litz wire.

In another aspect of the present disclosure, there is provided apparatus for an aerosol generating system, wherein the system is configured to, in use, heat an aerosol generating material to thereby generate an aerosol to flow along an aerosol flow path to be inhaled by a user; wherein the system comprises: a temperature sensor for measuring a temperature at a given location in the system which is outside of the aerosol flow path; and wherein the given location is predetermined to be a hottest location, outside of the aerosol flow path, in the system, when the system is in use to generate an aerosol.

The system may comprise: an insulating member which in use thermally insulates the aerosol flow path from locations in the system outside of the aerosol flow path; and the given location may be predetermined to be a hottest location, when the system is in use to generate an aerosol, of the given locations which are insulated from the aerosol flow path.

The given location at which the temperature sensor is located may be predetermined to be a location in the system expected to reach a temperature hotter than other locations in the system which are outside of the aerosol flow path and which may be insulated from the aerosol flow path by the insulating member. For example, the predetermined location may be insulated from the susceptor by the insulating member and may be the predetermined location which is the potentially hottest location of a plurality of locations in the system which are insulated from the susceptor by the insulating member. A control arrangement of the device may be configured to take a control action, such as stopping or reducing power supplied to heat the aerosol generating material, if the temperature sensor senses a temperature which exceeds a predetermined value. The given location may be predetermined through empirical testing of the system to determine temperatures at locations in the system outside of the aerosol flow path. The given location may be predetermined through modelling expected temperatures at locations in the system outside of the aerosol flow path during use of the system. In examples, the given location may be predetermined as the location outside of the aerosol flow path which is expected to reach a hottest temperature compared to other locations in the system when a heating arrangement of the system is overheating.

Further features and advantages of the invention will become apparent from the following description of preferred embodiments of the invention, given by way of example only, which is made with reference to the accompanying drawings.

### Brief Description of the Drawings

Figure 1 shows a front view of an example of an aerosol generating device;
Figure 2 shows a front view of the aerosol generating device of Figure 1 with an outer cover removed;
Figure 3 shows a cross-sectional view of the aerosol generating device of Figure 1;
Figure 4 shows an exploded view of the aerosol generating device of Figure 2;
Figure 5A shows a cross-sectional view of a heating assembly within an aerosol generating device;
Figure 5B shows a close-up view of a portion of the heating assembly of Figure 5A;
Figure 6 shows a rear view of the aerosol generating device with an outer cover removed;
Figure 7 shows a flow chart representation of an example method of controlling an example aerosol generating device;
Figure 8 shows a schematic representation of aspects of an example control means for an aerosol generating device.

### Detailed Description

As used herein, the term "aerosol generating material" includes materials that provide volatilised components upon heating, typically in the form of an aerosol. Aerosol generating material includes any tobacco-containing material and may, for example, include one or more of tobacco, tobacco derivatives, expanded tobacco, reconstituted tobacco or tobacco substitutes. Aerosol generating material also may include other, non-tobacco, products, which, depending on the product, may or may not contain nicotine. Aerosol generating material may for example be in the form of a solid, a liquid, a gel, a wax or the like. Aerosol generating material may for example also be a combination or a blend of materials. Aerosol generating material may also be known as "smokable material".

Apparatus is known that heats aerosol generating material to volatilise at least one component of the aerosol generating material, typically to form an aerosol which can be inhaled, without burning or combusting the aerosol generating material. Such apparatus is sometimes described as an "aerosol generating device", an "aerosol provision device", a "heat-not-burn device", a "tobacco heating product device" or a "tobacco heating device" or similar. Similarly, there are also so-called e-cigarette devices, which typically vaporise an aerosol generating material in the form of a liquid, which may or may not contain nicotine. The aerosol generating material may be in the form of or be provided as part of a rod, cartridge or cassette or the like which can be inserted into the apparatus. A heater for heating and volatilising the aerosol generating material may be provided as a "permanent" part of the apparatus.

An aerosol provision device can receive an article comprising aerosol generating material for heating. An "article" in this context is a component that includes or contains in use the aerosol generating material, which is heated to volatilise the aerosol generating material, and optionally other components in use. A user may insert the article into the aerosol provision device before it is heated to produce an aerosol, which the user subsequently inhales. The article may be, for example, of a predetermined or specific size that is configured to be placed within a heating chamber of the device which is sized to receive the article.

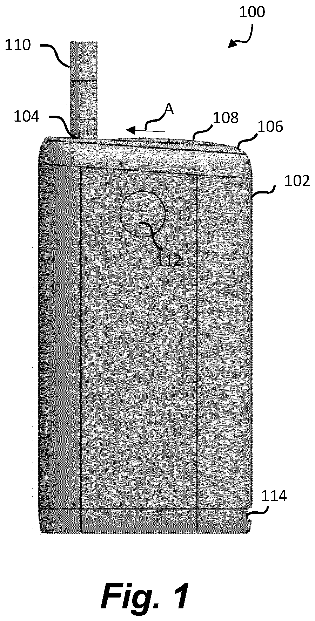

Figure 1 shows an example of an aerosol provision device 100 for generating aerosol from an aerosol generating medium/material. In broad outline, the device 100 may be used to heat a replaceable article 110 comprising the aerosol generating medium, to generate an aerosol or other inhalable medium which is inhaled by a user of the device 100.

The device 100 comprises a housing 102 (in the form of an outer cover) which surrounds and houses various components of the device 100. The device 100 has an opening 104 in one end, through which the article 110 may be inserted for heating by a heating assembly. In use, the article 110 may be fully or partially inserted into the heating assembly where it may be heated by one or more components of the heater assembly.

The device 100 of this example comprises a first end member 106 which comprises a lid 108 which is moveable relative to the first end member 106 to close the opening 104 when no article 110 is in place. In Figure 1, the lid 108 is shown in an open configuration, however the cap 108 may move into a closed configuration. For example, a user may cause the lid 108 to slide in the direction of arrow "A".

The device 100 may also include a user-operable control element 112, such as a button or switch, which operates the device 100 when pressed. For example, a user may turn on the device 100 by operating the switch 112.

The device 100 may also comprise an electrical component, such as a socket/port 114, which can receive a cable to charge a battery of the device 100. For example, the socket 114 may be a charging port, such as a USB charging port. In some examples the socket 114 may be used additionally or alternatively to transfer data between the device 100 and another device, such as a computing device.

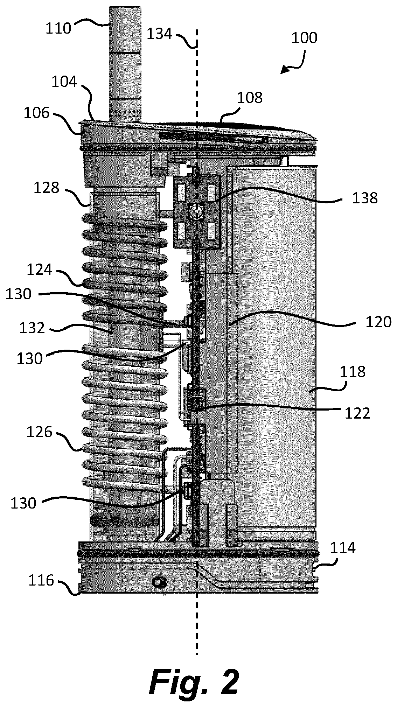

Figure 2 depicts the device 100 of Figure 1 with the outer cover 102 removed. The device 100 defines a longitudinal axis 134.

As shown in Figure 2, the first end member 106 is arranged at one end of the device 100 and a second end member 116 is arranged at an opposite end of the device 100. The first and second end members 106, 116 together at least partially define end surfaces of the device 100. For example, the bottom surface of the second end member 116 at least partially defines a bottom surface of the device 100. Edges of the outer cover 102 may also define a portion of the end surfaces. In this example, the lid 108 also defines a portion of a top surface of the device 100. Figure 2 also shows a second printed circuit board 138 associated within the control element 112.

The end of the device closest to the opening 104 may be known as the proximal end (or mouth end) of the device 100 because, in use, it is closest to the mouth of the user. In use, a user inserts an article 110 into the opening 104, operates the user control 112 to begin heating the aerosol generating material and draws on the aerosol generated in the device. This causes the aerosol to flow through the device 100 along a flow path towards the proximal end of the device 100.

The other end of the device furthest away from the opening 104 may be known as the distal end of the device 100 because, in use, it is the end furthest away from the mouth of the user. As a user draws on the aerosol generated in the device, the aerosol flows away from the distal end of the device 100.

The device 100 further comprises a power source 118. The power source 118 may be, for example, a battery, such as a rechargeable battery or a non-rechargeable battery. Examples of suitable batteries include, for example, a lithium battery (such as a lithium-ion battery), a nickel battery (such as a nickel-cadmium battery), and an alkaline battery. The battery is electrically coupled to the heating assembly to supply electrical power when required and under control of a controller (not shown) to heat the aerosol generating material. In this example, the battery is connected to a central support 120 which holds the battery 118 in place.

The device further comprises at least one electronics module 122. The electronics module 122 may comprise, for example, a printed circuit board (PCB). The PCB 122 may support at least one controller, such as a processor, and memory. The PCB 122 may also comprise one or more electrical tracks to electrically connect together various electronic components of the device 100. For example, the battery terminals may be electrically connected to the PCB 122 so that power can be distributed throughout the device 100. The socket 114 may also be electrically coupled to the battery via the electrical tracks.

In the example device 100, the heating assembly is an inductive heating assembly and comprises various components to heat the aerosol generating material of the article 110 via an inductive heating process. Induction heating is a process of heating an electrically conducting object (such as a susceptor) by electromagnetic induction. An induction heating assembly may comprise an inductive element, for example, one or more inductor coils, and a device for passing a varying electric current, such as an alternating electric current, through the inductive element. The varying electric current in the inductive element produces a varying magnetic field. The varying magnetic field penetrates a susceptor suitably positioned with respect to the inductive element, and generates eddy currents inside the susceptor. The susceptor has electrical resistance to the eddy currents, and hence the flow of the eddy currents against this resistance causes the susceptor to be heated by Joule heating. In cases where the susceptor comprises ferromagnetic material such as iron, nickel or cobalt, heat may also be generated by magnetic hysteresis losses in the susceptor, i.e. by the varying orientation of magnetic dipoles in the magnetic material as a result of their alignment with the varying magnetic field. In inductive heating, as compared to heating by conduction for example, heat is generated inside the susceptor, allowing for rapid heating. Further, there need not be any physical contact between the inductive heater and the susceptor, allowing for enhanced freedom in construction and application.

The induction heating assembly of the example device 100 comprises a susceptor arrangement 132 (herein referred to as "a susceptor"), a first inductor coil 124 and a second inductor coil 126. The first and second inductor coils 124, 126 are made from an electrically conducting material. In this example, the first and second inductor coils 124, 126 are made from Litz wire/cable which is wound in a helical fashion to provide helical inductor coils 124, 126. Litz wire comprises a plurality of individual wires which are individually insulated and are twisted together to form a single wire. Litz wires are designed to reduce the skin effect losses in a conductor. In the example device 100, the first and second inductor coils 124, 126 are made from copper Litz wire which has a substantially circular cross section. In other examples the Litz wire can have other shape cross sections, such as rectangular.

The first inductor coil 124 is configured to generate a first varying magnetic field for heating a first section of the susceptor 132 and the second inductor coil 126 is configured to generate a second varying magnetic field for heating a second section of the susceptor 132. Herein, the first section of the susceptor 132 is referred to as the first susceptor zone 132a and the second section of the susceptor 132 is referred to as the second susceptor zone 132b. In this example, the first inductor coil 124 is adjacent to the second inductor coil 126 in a direction along the longitudinal axis 134 of the device 100 (that is, the first and second inductor coils 124, 126 to not overlap). In this example the susceptor arrangement 132 comprises a single susceptor comprising two zones, however in other examples the susceptor arrangement 132 may comprise two or more separate susceptors. Ends 130 of the first and second inductor coils 124, 126 are connected to the PCB 122.

It will be appreciated that the first and second inductor coils 124, 126, in some examples, may have at least one characteristic different from each other. For example, the first inductor coil 124 may have at least one characteristic different from the second inductor coil 126. More specifically, in one example, the first inductor coil 124 may have a different value of inductance than the second inductor coil 126. In Figure 2, the first and second inductor coils 124, 126 are of different lengths such that the first inductor coil 124 is wound over a smaller section of the susceptor 132 than the second inductor coil 126. Thus, the first inductor coil 124 may comprise a different number of turns than the second inductor coil 126 (assuming that the spacing between individual turns is substantially the same). In yet another example, the first inductor coil 124 may be made from a different material to the second inductor coil 126. In some examples, the first and second inductor coils 124, 126 may be substantially identical.

In this example, the inductor coils 124 126 are wound in the same direction as one another. That is, both the first inductor coil 124, and the second inductor coil 126 are left-hand helices. In another example, both inductor coils 124, 126 may be right-hand helices. In yet another example (not shown), the first inductor coil 124 and the second inductor coil 126 are wound in opposite directions. This can be useful when the inductor coils are active at different times. For example, initially, the first inductor coil 124 may be operating to heat a first section of the article 110, and at a later time, the second inductor coil 126 may be operating to heat a second section of the article 110. Winding the coils in opposite directions helps reduce the current induced in the inactive coil when used in conjunction with a particular type of control circuit. In one example where the coils 124, 126 are wound in different directions (not shown) the first inductor coil 124 may be a right-hand helix and the second inductor coil 126 may be a left-hand helix. In another such embodiment, the first inductor coil 124 may be a left-hand helix and the second inductor coil 126 may be a right-hand helix.

The susceptor 132 of this example is hollow and therefore defines a receptacle within which aerosol generating material is received. For example, the article 110 can be inserted into the susceptor 132. In this example the susceptor 132 is tubular, with a circular cross section.

The device 100 of Figure 2 further comprises an insulating member 128 which may be generally tubular and at least partially surround the susceptor 132. The insulating member 128 may be constructed from any insulating material, such as a plastics material for example. In this particular example, the insulating member is constructed from polyether ether ketone (PEEK). The insulating member 128 may help insulate the various components of the device 100 from the heat generated in the susceptor 132.

The insulating member 128 can also fully or partially support the first and second inductor coils 124, 126. For example, as shown in Figure 2, the first and second inductor coils 124, 126 are positioned around the insulating member 128 and are in contact with a radially outward surface of the insulating member 128. In some examples the insulating member 128 does not abut the first and second inductor coils 124, 126. For example, a small gap may be present between the outer surface of the insulating member 128 and the inner surface of the first and second inductor coils 124, 126.

In a specific example, the susceptor 132, the insulating member 128, and the first and second inductor coils 124, 126 are coaxial around a central longitudinal axis of the susceptor 132.

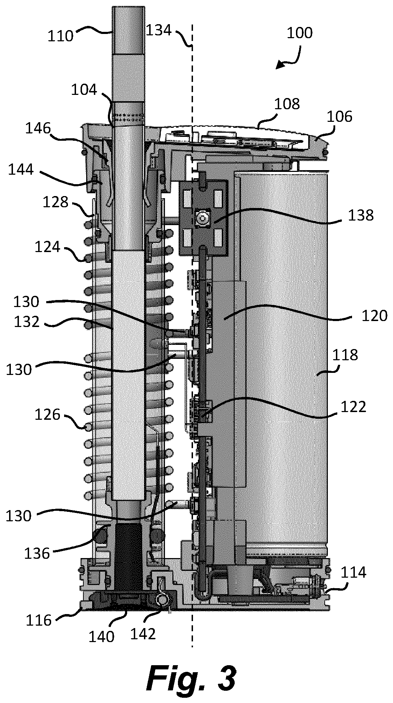

Figure 3 shows a side view of device 100 in partial cross-section. The outer cover 102 is again not present in this example. The circular cross-sectional shape of the first and second inductor coils 124, 126 is more clearly visible in Figure 3.

The device 100 further comprises a support 136 which engages one end of the susceptor 132 to hold the susceptor 132 in place. The support 136 is connected to the second end member 116.

The device 100 further comprises a second lid/cap 140 and a spring 142, arranged towards the distal end of the device 100. The spring 142 allows the second lid 140 to be opened, to provide access to the susceptor 132. A user may, for example, open the second lid 140 to clean the susceptor 132 and/or the support 136.

The device 100 further comprises an expansion chamber 144 which extends away from a proximal end of the susceptor 132 towards the opening 104 of the device. Located at least partially within the expansion chamber 144 is a retention clip 146 to abut and hold the article 110 when received within the device 100. The expansion chamber 144 is connected to the end member 106.

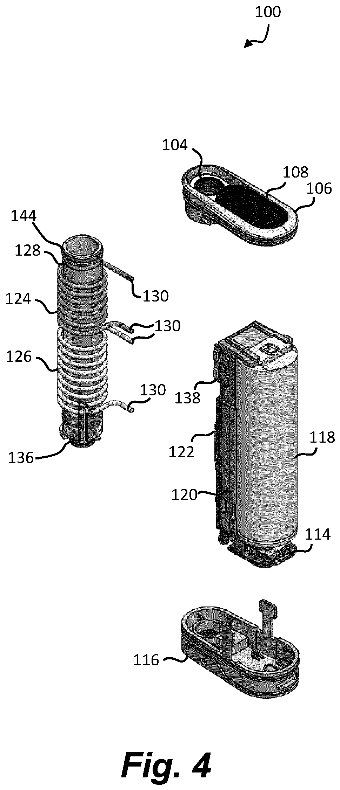

Figure 4 is an exploded view of the device 100 of Figure 1, with the outer cover 102 again omitted.

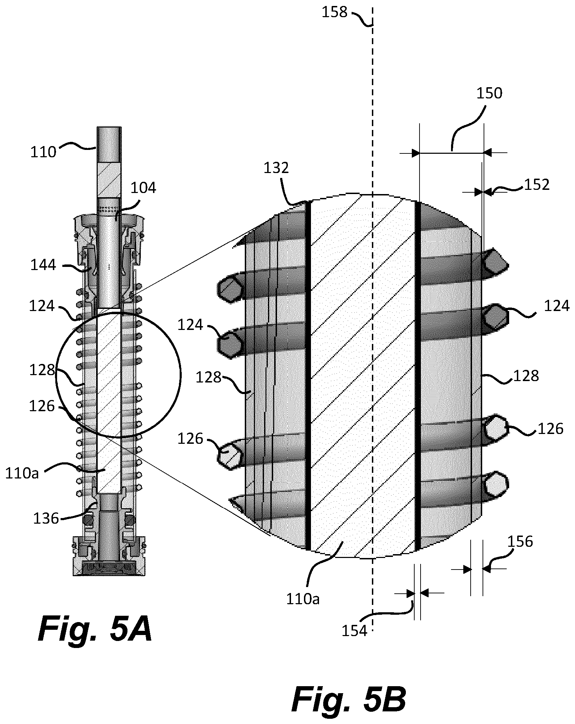

Figure 5A depicts a cross section of a portion of the device 100 of Figure 1. Figure 5B depicts a close-up of a region of Figure 5A. Figures 5A and 5B show the article 110 received within the susceptor 132, where the article 110 is dimensioned so that the outer surface of the article 110 abuts the inner surface of the susceptor 132. This ensures that the heating is most efficient. The article 110 of this example comprises aerosol generating material 110a. The aerosol generating material 110a is positioned within the susceptor 132. The article 110 may also comprise other components such as a filter, wrapping materials and/or a cooling structure.

Figure 5B shows that the outer surface of the susceptor 132 is spaced apart from the inner surface of the inductor coils 124, 126 by a distance 150, measured in a direction perpendicular to a longitudinal axis 158 of the susceptor 132. In one particular example, the distance 150 is about 3mm to 4mm, about 3mm to 3.5mm, or about 3.25mm.

Figure 5B further shows that the outer surface of the insulating member 128 is spaced apart from the inner surface of the inductor coils 124, 126 by a distance 152, measured in a direction perpendicular to a longitudinal axis 158 of the susceptor 132. In one particular example, the distance 152 is about 0.05mm. In another example, the distance 152 is substantially 0mm, such that the inductor coils 124, 126 abut and touch the insulating member 128.

In one example, the susceptor 132 has a wall thickness 154 of about 0.025mm to 1mm, or about 0.05mm.

In one example, the susceptor 132 has a length of about 40mm to 60mm, about 40mm to 45mm, or about 44.5mm.

In one example, the insulating member 128 has a wall thickness 156 of about 0.25mm to 2mm, 0.25mm to 1mm, or about 0.5mm.

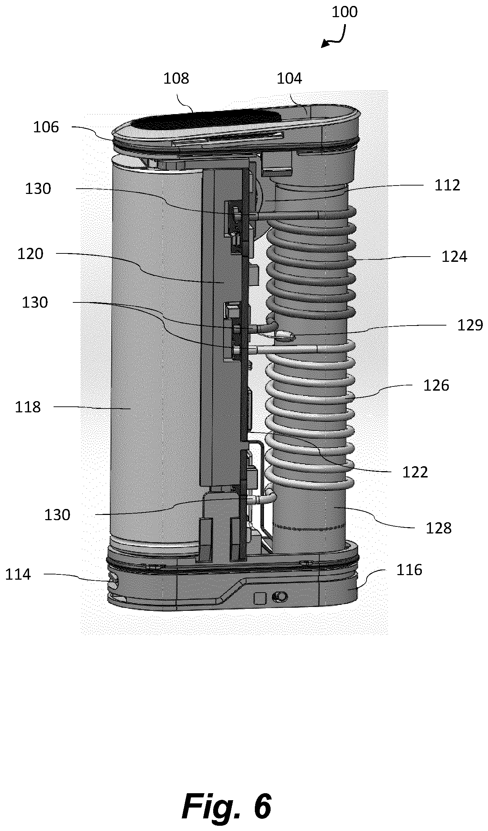

Figure 6 shows a rear side view of the device 100. The device 100 comprises a temperature sensor 129 located at an outer surface of the insulating member 128. The temperature sensor 129 in this example is a thermistor which is attached to the PCB 122 and which is configured to provide measurements of a temperature Tᵢₙₛ at the insulating member 128 to a control arrangement (described below) on the PCB 122. The temperature sensor 129 in this example is configured to be positioned centrally of the first inductor 124 and the second inductor 126 with respect to the longitudinal axis 134 of the device 100. In examples, the position of the temperature sensor 129, may be chosen to be at a potential hottest point of the insulating member 128. This may be determined through testing of the device 100, by measuring a hottest point on the outside surface of the insulating member 128 while the susceptor 132 is overheated, for example.

The device 100 is configured take a control action, such as stopping heating of the susceptor 132 or reducing power supplied from the power supply 118 to heat the susceptor 132, in the event that the insulating member temperature sensor 129 measures a temperature Tᵢₙₛ which indicates that the susceptor 132 is overheating. The value of the temperature Tᵢₙₛ may indicate that the susceptor 132 is overheating if it reaches or exceeds a particular value. For example, the device 100 may be configured to cut off heating of the susceptor 132, or reduce power supplied to heat the susceptor 132, in the event that the insulating member temperature sensor 129 measures a temperature Tᵢₙₛ which is greater than or equal to a pre-determined threshold temperature value T_{cut-off}. This may be advantageous in that a safety feature is provided which allows cutting off or reducing of power to heat the susceptor 132 when the device 100 determines the susceptor 132 is becoming overheated.

While the susceptor 132 is being heated to heat the aerosol generating material 110a to generate an aerosol therefrom, the susceptor 132 may in some examples reach a maximum temperature of around 250°C, or in some examples a maximum temperature of around 150°C to around 350°C. In some examples the threshold temperature T_{cut-off} may be determined based on a maximum expected value for the temperature Tᵢₙₛ measured at the insulating member 128 when the susceptor 132 is at its maximum temperature. As described above, the temperature sensor 129 of the example device 100 is a thermistor which is located at a radially outer surface of the insulating member 128 and measures a temperature at this location. In one example, where the susceptor 132 is heated to a temperature of 250°C, the temperature Tᵢₙₛ measured by the insulating member temperature sensor 129 should not be expected to exceed around 90°C. Therefore, in one example, the device 100 is configured to cut off power to heat the susceptor 132 if the temperature sensor 129 reads a temperature Tᵢₙₛ which is greater than around 90°C, or greater than around 100°C.

In some examples, a temperature margin may be provided between the expected maximum temperature measured at the temperature sensor 129 and the threshold cut-off temperature. For example, in the above example, the threshold temperature measured by the temperature sensor 129 at which the device 100 cuts-off power to heat the susceptor 132 may be set at around 130°C or around 126°C, providing a margin of around 30-40°C above the expected maximum value of Tᵢₙₛ of around 90-100°C. As such, a margin is provided such that the device 100 does not cut off (or otherwise modify) the power supplied to heat the susceptor 132 in the event that the expected temperature at the insulating member 128 is only marginally exceeded.

The threshold temperature used to provide this safety feature of the device 100 may vary dependent on factors which affect the expected maximum temperature to be reached by the insulating member 128 and a desired amount of temperature margin. For example, where the susceptor 132 is heated to higher temperatures or where the insulating member 128 is located closer to the susceptor 132 in use, the threshold temperature may be set accordingly higher. Similarly, the thickness and material from which the insulating member 128 is made may affect the expected maximum value of the temperature Tᵢₙₛ during normal operation. The maximum value of the temperature Tᵢₙₛ may also depend on the positioning of the temperature sensor 129, for example the proximity of the temperature sensor 129 from a particular one of the susceptor zones 132a, 132b, which may be configured to be heated to different temperatures. The expected maximum value of Tᵢₙₛ for a particular configuration may in examples be obtained empirically, by recording values recorded by the temperature sensor 129 during normal operation of the device 100. A threshold temperature may then be set accordingly, for example by providing a given margin, of for example 20-50°C, or 30-40°C above the expected maximum temperature to be recorded by the sensor 129.

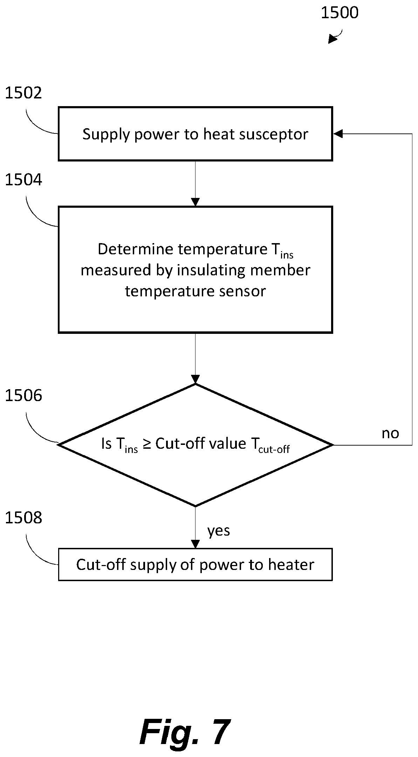

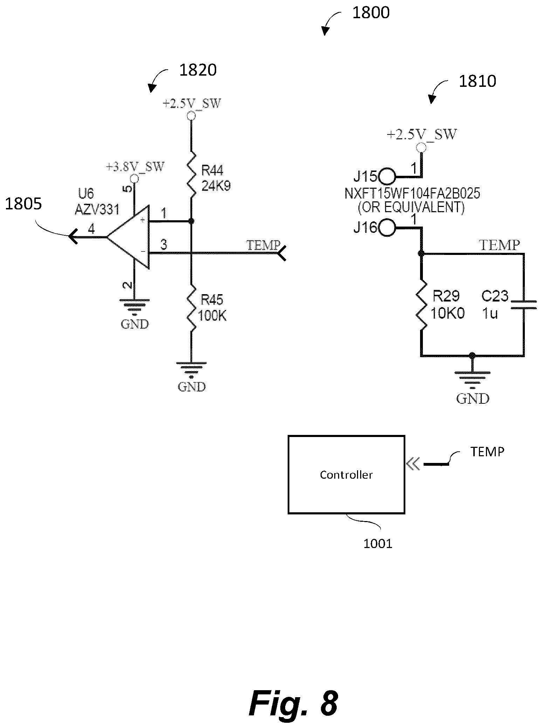

In examples, the device comprises a control arrangement (an example 1800 of which is shown below in Figure 8) for controlling the device 100 based on the temperature Tᵢₙₛ measured by the temperature sensor 129. Figure 7 shows a flowchart representation of an example method 1500 performed by an example control arrangement of the device 100. At block 1502 power is supplied from the power supply 118 to heat the susceptor 132. At block 1504 a temperature Tᵢₙₛ measured by the temperature sensor 129 at the insulating member 128 is determined. At block 1506 the control arrangement compares the temperature Tᵢₙₛ measured by the temperature sensor 129 to the threshold value T_{cut-off} (which may also be referred to as the cut-off value). If, at block 1506 the control arrangement determines that the temperature Tᵢₙₛ is less than the threshold value then the method returns to block 1502 and the device 100 continues to supply power to heat the susceptor 132. If, however, at block 1506 the control arrangement determines that the temperature Tᵢₙₛ is greater than or equal to the threshold value T_{cut-off} then the method proceeds to block 1508, whereby the control arrangement stops the supply of power to heat the susceptor 132.

The control arrangement therefore may prevent supply of power by the device 100 to heat the susceptor 132 when the temperature Tᵢₙₛ measured by the insulating member temperature sensor 129 reaches a pre-determined value. This provides a safety mechanism by cutting off the supply of power where an indication is received that the temperature Tᵢₙₛ of the insulating member 128 is too high. This may, for example, indicate overheating of the susceptor, due to, for example, the device 100 failing to turn off the heating arrangement of the device 100 when the susceptor 132 has reached the temperature required to generate an aerosol. The temperature Tᵢₙₛ reaching the threshold may in another example indicate that the insulating member 128 is not adequately insulating the susceptor 132 from other parts of the device 100 due to, for example, a fault with the insulating member 128.

Figure 8 shows an example schematic representation of a control arrangement 1800 for performing the method described with reference to Figure 7. As mentioned above, temperature sensor 129 is a thermistor. The thermistor 129 in this example is a NXFT15WF104FA2B025 NTC 100k Bead Thermistor, but in other examples other types of thermistor may be used. The thermistor 129 is connected to a first portion 1810 of the control arrangement 1800. The thermistor 129 is connected across a first point J15 and a second point J16 on the PCB 122. The first point J15 receives a 2.5V signal and the second point J16 connects to ground GND via a 10kΩ resistor R29 and a 1 µF capacitor C23, where the resistor R29 and capacitor C23 are connected in parallel with one another. From the thermistor 129 a temperature signal TEMP is provided on the PCB 122, where the temperature signal TEMP is indicative of the temperature Tᵢₙₛ measured by the thermistor 129. In examples, the temperature signal TEMP is also received by a controller 1001 from the first part 1810 of the control arrangement 1800, wherein the controller 1001 is also located on the PCB 122.

The temperature signal TEMP is provided to a second part 1820 of the control apparatus 1800. The second part 1820 of the control arrangement 1800 comprises a comparator U6 for determining if the temperature Tᵢₙₛ is at or above the cut-off value T_{cut-off} and for providing a cut-off signal 1805 in the event that the temperature Tᵢₙₛ is at or above the cut-off value T_{cut-off}. The comparator U6 in this example is an AZV331 analog comparator and is provided with power via a 3.8V supply connected between a power input terminal of the comparator U6 and ground GND. The temperature signal TEMP is provided to a negative terminal of the comparator U6 and a 2.5V signal is connected to a positive terminal of the comparator U6 via a 24.9kΩ resistor R44. The positive terminal of the comparator U6 is also connected to ground GND via a 100kΩ resistor R45.

In this example, the comparator U6 is configured to compare the voltage on its positive input to the voltage from the TEMP signal from the temperature sensor 129 on its negative input. If the comparator U6 determines from the temperature signal TEMP (originating from the thermistor 129 via the first part 1810 of the control arrangement 1800) that the temperature Tᵢₙₛ is at or above the cut-off temperature T_{cut-off}, then the comparator sends a signal 1805 to cause cutting off of power by the device 100 to heat the susceptor 132. In this example, when the signal 1805 goes low then this causes cutting off of power to heat the susceptor 132. In one example, the signal 1805 when sent by the comparator U6 of the control arrangement 1800 causes the device 100 to stop supplying power to the inductor coils 124, 126. In the present example, the comparator U6 is configured to provide the signal 1805 to cut off power to heat the susceptor 132 when the temperature Tᵢₙₛ measured by the temperature sensor 129 exceeds a cut-off temperature T_{cut-off} of 126°C. The cut-off temperature T_{cut-off} in this example apparatus 1800 may be changed by changing the values of one or more of the resistors R29, R44, R45.

In examples, the controller 1001 is configured to control the supply of power to the inductor coils 124, 126 to heat the susceptor 132. As described above, the inductor coils 124, 126 are respectively configured to heat the first susceptor zone 132a and the second susceptor zone 132b. The controller 1001 may in examples be configured to control the supply of power to the inductors 124, 126 such that only one of in the inductors 124, 126 is active to heat its respective susceptor zone 132a, 132b at any one instant. For example, the controller 1001 may be configured to determine which susceptor zone 132a, 132b should be heated at any one time, e.g. by comparing to a respective target temperature for each zone, and supply power to the respective inductor 124, 126 to heat the zone. However, the controller 1001 may determine at a point in the usage session that the temperature of both zones 132a, 132b should be increased. At such a point in a usage session, where it is desired to heat both zones 132a, 132b simultaneously, the controller 1001 may be configured to alternate rapidly, e.g. at a frequency of around 64Hz, between heating the first zone 132a and heating the second zone 132b. As such, both zones 132a, 132b may simultaneously at a temperature such that they are heating the aerosolisable material to produce an aerosol. Such a method of operation to alternate the supply of power to two inductor coils may be advantageous in an induction circuit in particular. In examples the cut-off signal 1805 is configured to be sent to override the control of the supply of power to the inductors 124, 126 by the controller 1001. In this case, if the controller 1001 fails to switch off one or both of the inductors 124, 126, for example, then the control arrangement 1800 provides a safety arrangement that cuts-off power from the power supply 118 in the event that overheating of the susceptor 132 is detected.

Furthermore, while in the above examples the temperature sensor 129 comprises a thermistor, in other examples, a different type of sensing arrangement may be used, such as a thermocouple. Similarly, the temperature sensing arrangement may comprise more than one temperature sensor and the method may comprise cutting off the supply of power if either temperature sensor of the temperature sensing arrangement detects a temperature which indicates overheating.

In another example, the device 100, e.g. the controller 1001, may be configured to determine a temperature of the insulating member 128 by another method than using the temperature sensor 129. For example, the controller 1001 may be configured to monitor the electrical resistance of one or both of the inductor coils 124, 126. The controller 1001 may, based on a pre-determined variation of the resistance of the coils 124, 126 with temperature, for example, use variations in this electrical resistance to determine a temperature of the insulating member 128. If this determined temperature for the insulating member 128 reaches or exceeds a threshold value, then the device 100 may cut-off the supply of power to heat the susceptor 132, for example as described with reference to earlier examples. For example, the determined temperature of the inductor coils 124, 126 may be considered indicative of a location at the outer surface of the insulating member 128, and thus to give an indication that overheating of the susceptor 132 is occurring.

Examples above have described methods of providing a cut-off of power when overheating of the susceptor is indicated based on a temperature sensing arrangement located on an insulating member. However, it should also be understood that example methods described herein may be used with a temperature sensor located at another position on or in the device, which may in examples be separated from the heated susceptor by the insulating member. For example, a temperature sensor for use in a method described herein may be located at a position in the device which is out of an airflow path of the aerosol generated by the device in use, but at a location expected to become hottest in the event that the susceptor overheats. That is, such a temperature sensing arrangement at another position on or in the device may be used to determine that overheating is occurring by comparison of its measured temperature with a threshold value.

Similarly, while examples herein have been described with reference to a device which heats a susceptor by inductive heating, methods described herein may also be applied in an aerosol generating device which heats an aerosol by other means, such as by use of a resistive heating element or other heating arrangement. For example, the temperature sensor may be located at a location which is outside of the aerosol flow path of the device, but which is expected to reach a hottest temperature during use of the device. For example, the location of the temperature sensor may be predetermined as a location within the device, outside of the aerosol flow path, which is expected to reach a highest temperature compared to other locations in the device outside of the aerosol flow path during use of the device. The location of the temperature sensor may be predetermined based on which location in the device is expected to be at a highest temperature compared to other locations in the device when the heating arrangement, e.g. the susceptor, begins to overheat or reaches a predetermined threshold temperature. In examples, as described herein, the temperature sensor may be at location in the device which is insulated from the aerosol flow path, and may be thermally insulated from the heating arrangement by an insulating member. Furthermore, while examples herein have described an arrangement where two heating zones may be increased or maintained in temperature by rapidly alternating the supply of power to heat said zones, in other examples, two or more heating elements may receive power simultaneously. For example, an aerosol generating system employing methods described herein may comprise two or more heating elements which may be configured to simultaneously heat respective heating zones.

### Clauses

The following numbered clauses, which are not claims, provide additional disclosure relevant to the concepts described herein:
(Clause 1). Apparatus for an aerosol generating system, comprising:
   an inductive element for inductively heating a susceptor arrangement to heat an aerosol generating material to thereby generate an aerosol;
   an insulating member which in use is located between the inductive element and the susceptor arrangement to thermally insulate the susceptor arrangement from the inductive element;
   a temperature sensor for measuring a temperature at a location in the system insulated in use from the susceptor arrangement by the insulating member; and
   a control arrangement configured to monitor the temperature measured by the temperature sensor and take a control action if, based on the temperature measured by the temperature sensor, the control arrangement determines that the susceptor arrangement is overheating.
(Clause 2). Apparatus according to clause 1 wherein the control arrangement is configured to determine that the susceptor arrangement is overheating by determining if the temperature measured by the temperature sensor is greater than or equal to a threshold temperature value.
(Clause 3). Apparatus according to clause 1 or clause 2 wherein in use the insulating member at least partially surrounds the susceptor arrangement.
(Clause 4). Apparatus according to clause 3 wherein the insulating member is a tubular member which in use surrounds the susceptor.
(Clause 5). Apparatus according to clause 4 wherein the temperature sensor is arranged to measure a temperature at or near an outer surface of the insulating member.
(Clause 6). Apparatus according to any preceding clause wherein the insulating member is made of polyether ether ketone.
(Clause 7). Apparatus according to any of clauses 3 to 6 wherein the inductive element is a first inductor coil and the first inductor coil surrounds the insulating member.
(Clause 8). Apparatus according to clause 7, wherein the first inductor coil is in contact with a radially outward surface of the insulating member and the insulating member fully or partially supports the first inductor coil.
(Clause 9). Apparatus according to clause 8 wherein the inductive heating circuit comprises a second inductor coil for heating the susceptor arrangement and wherein the second inductor coil surrounds the insulating member and is in contact with the radially outward surface of the insulating member and the insulating member fully or partially supports the second inductor coil, and wherein the first inductor coil, the second inductor coil and the insulating member in use are located coaxially with one another around a central longitudinal axis of the susceptor arrangement.
(Clause 10). Apparatus according to any of clauses 2 to 9 wherein the pre-determined threshold temperature value is from 90°C to 180°C.
(Clause 11). Apparatus according to any of clauses 2 to 10 wherein the pre-determined threshold temperature value is around 126°C.
(Clause 12). Apparatus according to any preceding clause wherein the control action which the controller is configured to take comprises stopping the inductive element from heating the susceptor by preventing a supply of electrical power to the inductive element, or reducing the supply of electrical power to the inductive element to heat the susceptor.
(Clause 13). Apparatus according to any preceding clause wherein the susceptor arrangement comprises a first and a second heating zone, and wherein the inductive element is a first inductive element for heating the first heating zone and the apparatus further comprises a second inductive element for heating the second heating zone; and wherein the second inductive element is insulated from the susceptor arrangement by the insulating member.
(Clause 14). Apparatus according to clause 13, wherein the first inductive element and the second inductive element are configured to be operable to simultaneously maintain both the first heating zone and the second heating zone at temperatures for heating the aerosol generating material to produce an aerosol.
(Clause 15). Apparatus according to any preceding clause wherein the temperature sensor is located at a predetermined location which is insulated from the susceptor by the insulating member, and which is predetermined to be a potentially hottest location, during use of the system to generate an aerosol, of a plurality of locations in the system which are insulated from the susceptor by the insulating member.
(Clause 16). Apparatus according to clause 15 when dependent on clause 5 wherein the predetermined location is a hottest location, during use of the system to generate an aerosol, on the surface of the insulating member.
(Clause 17). An aerosol generating device comprising an apparatus according to any preceding clause, wherein the aerosol generating device is configured in use to generate an aerosol to be inhaled by a user.
(Clause 18). An aerosol generating system comprising an aerosol generating device according to clause 17 and an article comprising an aerosol generating material for being heated by the device in use to thereby generate an aerosol.
(Clause 19). An aerosol generating system according to clause 18, wherein the aerosol generating material comprises a tobacco material.
(Clause 20). Apparatus for an aerosol generating system for generating an aerosol to be inhaled by a user, the apparatus comprising:
   an insulating member for, when the system is in use to generate an aerosol, insulating an inductive element from a susceptor arrangement arranged to heat an aerosol generating material to thereby generate an aerosol, wherein the inductive element is for heating the susceptor arrangement;
   a temperature sensor for, when the system is in use to generate an aerosol, measuring a temperature at a location in the system insulated from the susceptor arrangement by the insulating member, wherein the temperature sensor is configured to provide a measurement of a temperature at the location in the system to a control arrangement to allow the control arrangement to determine if the susceptor arrangement is overheating and to allow the control arrangement to take a control action if the control arrangement determines that the susceptor arrangement is overheating.
(Clause 21). A method for a control arrangement for an aerosol generating device, the apparatus comprising:
   an inductive element for inductively heating a susceptor arrangement to heat an aerosol generating material to thereby generate an aerosol;
   an insulating member which in use is located between the inductive element and the susceptor arrangement to thermally insulate the susceptor arrangement from the inductive element;
   a temperature sensor for measuring a temperature at a location in the system insulated in use from the susceptor arrangement by the insulating member; and
   the control arrangement; wherein the method comprises:
      monitoring the temperature measured by the temperature sensor; and
      taking a control action if, based on the temperature measured by the temperature sensor, the control arrangement determines that the susceptor arrangement is overheating.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. Apparatus for an aerosol generating system, comprising:
one or more inductive elements for inductively heating a susceptor arrangement to heat an aerosol generating material to thereby generate an aerosol;
an insulating member which in use is located between the inductive element and the susceptor arrangement to thermally insulate the susceptor arrangement from the inductive element; and
a control arrangement configured to determine a characteristic indicative of a temperature of one or more of the inductive elements and take a control action if, based on the determined characteristic, the control arrangement determines that the susceptor arrangement is overheating.

2. The apparatus according to claim 1, wherein the determined characteristic is an electrical resistance of one of the inductive elements.

3. The apparatus according to claim 2, wherein the control arrangement is configured to determine that the susceptor arrangement is overheating if the electrical resistance of one of the inductive elements exceeds a predetermined threshold.

4. The apparatus according to any of claims 1 to 3, wherein the apparatus comprises two inductive elements, optionally wherein the control arrangement is configured to determine that the susceptor arrangement is overheating if an electrical resistance of either of the two inductive elements exceeds a predetermined threshold.

5. The apparatus according to any of claims 1 to 4, wherein the one or more inductive heating elements each comprise an inductor coil, optionally wherein the inductor coil is wound from Litz wire.

6. Apparatus according to any preceding claim wherein in use the insulating member at least partially surrounds the susceptor arrangement, optionally wherein the insulating member is a tubular member which in use surrounds the susceptor arrangement.

7. Apparatus according to claim 6, wherein the inductive element is a first inductor coil and the first inductor coil surrounds the insulating member,
optionally wherein the first inductor coil is in contact with a radially outward surface of the insulating member and the insulating member fully or partially supports the first inductor coil,
further optionally wherein the apparatus further comprises a second inductor coil for heating the susceptor arrangement and wherein the second inductor coil surrounds the insulating member and is in contact with the radially outward surface of the insulating member and the insulating member fully or partially supports the second inductor coil, and wherein the first inductor coil, the second inductor coil and the insulating member in use are located coaxially with one another around a central longitudinal axis of the susceptor arrangement.

8. Apparatus according to any preceding claim, wherein the insulating member is made of polyether ether ketone.

9. Apparatus according to any preceding claim, wherein the control action which the control arrangement is configured to take comprises stopping the inductive element from heating the susceptor arrangement by preventing a supply of electrical power to the inductive element, or reducing the supply of electrical power to the inductive element to heat the susceptor arrangement.

10. Apparatus according to any preceding claim, wherein the susceptor arrangement comprises a first and a second heating zone, and wherein the inductive element is a first inductive element for heating the first heating zone and the apparatus further comprises a second inductive element for heating the second heating zone; and wherein the second inductive element is insulated from the susceptor arrangement by the insulating member, optionally wherein the first inductive element and the second inductive element are configured to be operable to simultaneously maintain both the first heating zone and the second heating zone at temperatures for heating the aerosol generating material to produce an aerosol.

11. An aerosol generating device comprising an apparatus according to any preceding claim, wherein the aerosol generating device is configured in use to generate an aerosol to be inhaled by a user.

12. An aerosol generating system comprising an aerosol generating device according to claim 11 and an article comprising an aerosol generating material for being heated by the device in use to thereby generate an aerosol.

13. An aerosol generating system according to claim 12, wherein the aerosol generating material comprises a tobacco material.

14. Apparatus for an aerosol generating system for generating an aerosol to be inhaled by a user, the apparatus comprising:
an insulating member for, when the system is in use to generate an aerosol, insulating an inductive element from a susceptor arrangement arranged to heat an aerosol generating material to thereby generate an aerosol, wherein the inductive element is for heating the susceptor arrangement;
a control arrangement configured to determine a characteristic indicative of a temperature of one or more of the inductive elements and take a control action if, based on the determined characteristic, the control arrangement determines that the susceptor arrangement is overheating.

15. A method for a control arrangement for an aerosol generating device, the aerosol provision device comprising:
one or more inductive elements for inductively heating a susceptor arrangement to heat an aerosol generating material to thereby generate an aerosol;
an insulating member which in use is located between the inductive element and the susceptor arrangement to thermally insulate the susceptor arrangement from the inductive element; and
the control arrangement; wherein the method comprises:
determining a characteristic indicative of a temperature of one or more of the inductive elements; and
taking a control action if, based on the determined characteristic, the control arrangement determines that the susceptor arrangement is overheating.
